# FASCICULE DE BREVET EUROPEEN

(11) **EP 2 084 025 B1**
(45) Date de publication et mention de la délivrance du brevet: **10.03.2010**
(21) Numéro de dépôt: 07823669.2
(22) Date de dépôt: 31.07.2007
(51) Int. Cl.: B60H 1/00

(54) **SYSTEME DE CHAUFFAGE POUR VEHICULE COUPLE A UN SYSTEME EGR**
AN EIN AGR-SYSTEM GEKOPPELTES FAHRZEUGHEIZUNGSSYSTEM
VEHICLE HEATING SYSTEM COUPLED TO AN EGR SYSTEM

(30) Priorité: 02.11.2006 FR 0609587
(43) Date de publication de la demande: 05.08.2009
(73) Titulaire: Renault SAS, 92100 Boulogne Billancourt (FR)
(72) Inventeur: ROUAUD, Cédric, F-78000 Versailles (FR); AUDRAN, Luc, F-78390 Bois D'arcy (FR)
(86) Numéro de dépôt international: PCT/FR2007/051757
(87) Numéro de publication internationale: WO 2008/053104

(56) Documents cités:
- DE-A1- 10 143 091
- DE-A1- 10 300 593
- FR-A1- 2 854 103
- US-A1- 2002 074 105

## Description

L'invention concerne un système de chauffage d'habitacle de véhicule automobile équipé de solutions de diminution des émissions de Nox à l'échappement, par EGR (Exhaust Gaz Recirculation) basse pression et éventuellement haute pression. L'invention concerne aussi un véhicule automobile en tant que tel équipé d'un tel système. Enfin, elle concerne aussi un procédé de gestion du chauffage de l'habitacle d'un véhicule automobile.

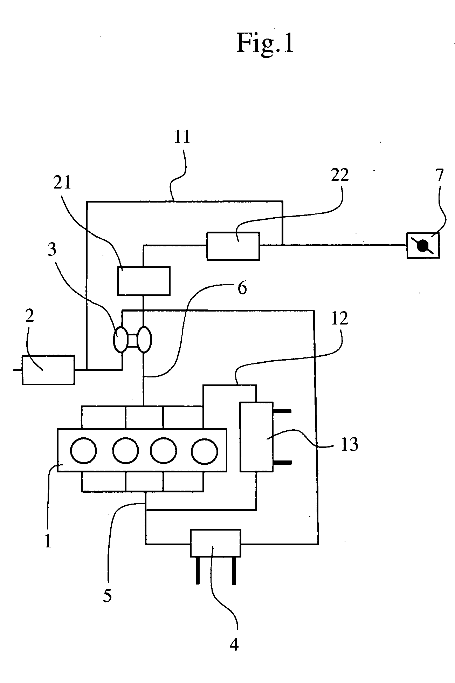

Un système de chauffage du type cité ci-dessus est par exemple connu du document DE 10300593, qui est considéré comme l'art antérieur le plus proche. Il existe dans l'art antérieur des solutions pour lutter contre la pollution provoquée par les gaz d'échappement des véhicules automobiles. La figure 1 illustre une telle solution, qui comprend un moteur 1 alimenté en air par une entrée 2, un compresseur 3, un échangeur 4 puis une admission moteur 5. Pour diminuer l'émission en Nox des gaz d'échappement sortant sur l'échappement 6 du véhicule, une première solution, connue sous la dénomination anglo-saxonne d'EGR (Exhaust Gaz Recirculation) haute pression, consiste en une recirculation 12 des gaz d'échappement en sortie du moteur, traversant un échangeur 13 avant de rejoindre l'admission moteur 5. Une seconde solution, connue sous sa dénomination d'EGR basse pression, consiste en une recirculation 11 d'une partie des gaz d'échappement récupérés vers la sortie du véhicule, après leur passage par différents dispositifs de traitements comme un catalyseur 21, un catalyseur d'oxydation, un filtre à particules 22, pour leur réadmission à l'entrée du compresseur 3. Une vanne d'échappement 7 permet de régler la quantité de gaz basse pression à recirculer. Une telle solution de recirculation 11 de gaz d'échappement non refroidis présente l'inconvénient de risquer d'endommager le compresseur 3 si les gaz ont une température trop élevée et de diminuer le rendement du compresseur.

Les nouvelles motorisations ont atteint un niveau de rendement tel que le transfert de chaleur depuis les chambres de combustion et depuis les zones de frottement des éléments mécaniques entre eux vers le liquide de refroidissement est devenu très faible. Cette perte de puissance thermique empêche d'obtenir un confort thermique dans l'habitacle dans un délai raisonnable (environ 30 minutes après le démarrage du moteur en ambiance très froide par exemple -18°C). Elle entraîne de plus une surconsommation du véhicule dans la phase de démarrage et de montée en température du moteur.

La demande de brevet FR 2 854 103 présente une solution de système de chauffage d'habitacle d'automobile comprenant un circuit de liquide de refroidissement moteur, présentant un aérotherme et un échangeur gaz d'échappement-liquide de refroidissement, positionné en sortie de la ligne d'échappement. Une vanne permet de définir selon les besoins la quantité de gaz d'échappement utile au niveau de l'échangeur gaz d'échappement-liquide, le reste des gaz étant orienté vers un by-pass. Grâce à un tel système, une partie de la chaleur des gaz d'échappement sert à réchauffer le liquide de refroidissement dont la chaleur est ensuite exploitée pour le chauffage de l'habitacle via l'aérotherme. Cette solution améliore la montée en température de l'habitacle lors de la phase de démarrage. Toutefois, elle présente l'inconvénient que lorsque le véhicule est équipé d'un dispositif anti-pollution tel que décrit précédemment et situé en amont de l'échangeur gaz d'échappement - liquide de refroidissement, les gaz ne passent plus ou en petite quantité seulement dans la partie finale d'échappement et la solution décrite dans ce document n'est plus efficace.

Le but de l'invention est de fournir un système de chauffage de l'habitacle d'un véhicule équipé d'un dispositif anti-pollution EGR basse pression, obviant aux inconvénients cités précédemment.

Plus précisément, l'invention propose un système de chauffage de liquide de refroidissement combiné à un système anti-pollution EGR basse pression permettant une performance optimale des deux systèmes dans toutes les situations, c'est-à-dire permettant un bon chauffage de l'habitacle notamment dans la phase de montée en température et permettant un fonctionnement de l'EGR basse pression sans agression du compresseur.

Selon l'invention, le système de chauffage pour véhicule automobile comprenant un moteur, une ligne d'échappement pour les gaz d'échappement et une recirculation possible des gaz d'échappement basse pression en entrée du compresseur de la ligne d'admission des gaz vers le moteur, cette recirculation étant commandée par une vanne de recirculation, est **caractérisé en ce que** le système comprend un échangeur gaz d'échappement - liquide sur la ligne d'échappement en amont de la vanne de recirculation, apte à refroidir les gaz d'échappement et à chauffer simultanément un liquide, et en ce qu'il comprend un dispositif pour récupérer la chaleur de ce liquide afin de chauffer l'habitacle du véhicule.

L'échangeur gaz d'échappement - liquide peut se trouver proche de la vanne de recirculation, après la sortie d'au moins un système de post traitement comme un catalyseur.

Le liquide peut être le liquide de refroidissement du moteur.

Le système peut comprendre une vanne trois voies pour orienter les gaz d'échappement vers l'échangeur gaz d'échappement - liquide ou vers un by-pass.

Le système peut comprendre un capteur de température du liquide de refroidissement en sortie du moteur et un capteur de température de l'air de l'habitacle.

Le système peut comprendre un EGR haute pression.

Un véhicule automobile selon l'invention comprend un système de chauffage défini précédemment.

Selon l'invention, un procédé de régulation de la température de l'habitacle d'un véhicule automobile défini ci-dessus est **caractérisé en ce qu**'il comprend une étape initiale de montée en température dans laquelle la température d'eau en sortie du moteur est relativement basse et la température de l'habitacle n'a pas encore atteint la température recherchée, dans laquelle une première vanne dirige les gaz d'échappement basse pression vers un échangeur gaz d'échappement - liquide pour chauffer l'habitacle en récupérant de la chaleur provenant des gaz d'échappement basse pression et dans laquelle une deuxième vanne ferme partiellement l'échappement des gaz vers l'extérieur et les force vers l'admission moteur pour transmettre ces gaz basse pression au moteur pour diminuer les émissions polluantes des gaz d'échappement.

Le procédé de régulation de la température peut comprendre une étape intermédiaire dans laquelle la première vanne dirige les gaz vers l'échangeur gaz d'échappement - liquide alors que la deuxième vanne dirige substantiellement l'échappement des gaz vers l'extérieur.

Le procédé de régulation de la température peut comprendre une étape de régime stabilisé, dans laquelle les gaz d'échappement sont orientés directement vers l'extérieur par les première et deuxième vannes, par l'intermédiaire d'un by-pass et sans recirculation ou peu par la ligne de recirculation.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente une solution de l'art antérieur ;
la figure 2 représente un mode d'exécution de l'invention.

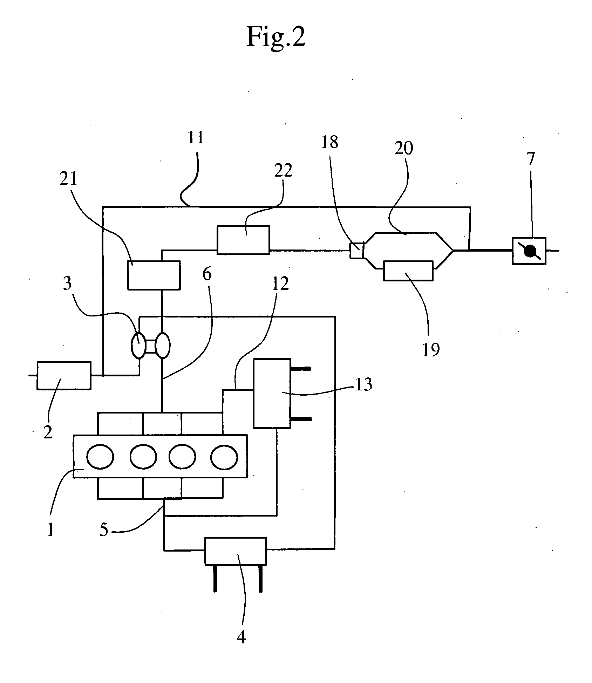

La figure 2 illustre une mise en oeuvre de l'invention dans laquelle les mêmes éléments que dans la figure 1 de l'art antérieur portent les mêmes références. Cette solution prévoit l'utilisation d'un échangeur de chaleur 19 en amont de la vanne 7 de recirculation des gaz d'échappement du système EGR basse pression. Une vanne trois voies 18 permet de choisir si les gaz d'échappement doivent passer par cet échangeur 19 ou par un by-pass 20.

L'échangeur de chaleur 19 permet de refroidir les gaz d'échappement et de chauffer le liquide de refroidissement du moteur dont la chaleur est récupérée par un aérotherme, non représenté, afin de chauffer l'habitacle du véhicule. Ainsi, cet échangeur de chaleur 19 remplit les deux fonctions suivantes :
- il améliore le chauffage de l'habitacle. Comme les gaz d'échappement peuvent traverser l'échangeur de chaleur 19 indépendamment du fonctionnement du système EGR basse pression, il est toujours possible d'utiliser ce système de chauffage en cas de besoin ;
- il peut refroidir les gaz d'échappement destinés à une recirculation selon le système EGR basse pression, pour protéger le compresseur 3 et améliorer le rendement de celui-ci.

Ce dispositif est adapté à différents moteurs thermiques 1, diesel ou essence. D'autre part, il peut fonctionner avec ou sans dispositif d'EGR haute pression, qui est optionnel. L'échangeur 19 est placé en amont de la vanne 7 de recirculation des gaz basse pression, de préférence juste avant cette vanne, après différents dispositifs de post-traitements des gaz (catalyseur 21, FAP 22, Nox-Trap), non représentés en intégralité. Toutefois, d'autres positionnements entre la sortie moteur et cette vanne seraient envisageables, sans sortir du concept de l'invention.

Avantageusement, ce dispositif comprend, comme cela est connu de l'art antérieur, un capteur de température du liquide de refroidissement en sortie du moteur et un capteur de température d'air de l'habitacle, pour permettre une automatisation de la régulation de la température de l'habitacle. Ainsi, le dispositif de l'invention permet la mise en oeuvre d'un procédé de chauffage de l'habitacle performant comprenant les phases essentielles suivantes :
- en phase initiale de montée en température, la température d'eau en sortie du moteur n'a pas encore atteint une température seuil, de 60 degrés Celsius par exemple, la température de l'habitacle n'a pas encore atteint une température recherchée, de 21 degrés Celsius par exemple, et le moteur nécessite de l'EGR basse pression ; la vanne 18 dirige les gaz vers l'échangeur 19 et la vanne 7 ferme partiellement l'échappement des gaz vers l'extérieur et les force vers l'admission moteur 5 par la recirculation EGR basse pression 11 ;
- en régime stabilisé, le moteur est chaud et la configuration de la phase précédente peut être sélectionnée lors des fonctionnements à faible débit de gaz d'échappement, et au contraire, en cas de fort débit de gaz d'échappement, les vannes 18 et 7 guident ces gaz directement vers l'extérieur, par le by-pass 20 puis sans recirculer ou peu par la ligne EGR 11 ;
- enfin, des régimes intermédiaires sont possibles, nécessitant le chauffage de l'habitacle et le passage des gaz par l'échangeur 19, sans recirculation ou peu de ces gaz dans la ligne 11 EGR.

## Revendications

1. Système de chauffage pour véhicule automobile comprenant un moteur (1), une ligne d'échappement (6) pour les gaz d'échappement et une recirculation (11) possible des gaz d'échappement basse pression en entrée du compresseur (3) de la ligne d'admission des gaz vers le moteur, cette recirculation étant commandée par une vanne de recirculation (7), **caractérisé en ce que** le système comprend un échangeur gaz d'échappement - liquide (19) sur la ligne d'échappement (6) en amont de la vanne de recirculation (7), apte à refroidir les gaz d'échappement et à chauffer simultanément un liquide, et **en ce qu'**il comprend un dispositif pour récupérer la chaleur de ce liquide afin de chauffer l'habitacle du véhicule.

2. Système de chauffage pour véhicule automobile selon la revendication **1, caractérisé en ce que** l'échangeur gaz d'échappement - liquide (19) se trouve proche de la vanne de recirculation (7), après la sortie d'au moins un système de post traitement comme un catalyseur.

3. Système de chauffage pour véhicule automobile selon la revendication 1 ou 2, **caractérisé en ce que** le liquide est le liquide de refroidissement du moteur.

4. Système de chauffage pour véhicule automobile selon l'une des revendications précédentes, **caractérisé en ce qu'**il comprend une vanne trois voies (18) pour orienter les gaz d'échappement vers l'échangeur gaz d'échappement - liquide (19) ou vers un by-pass (20).

5. Système de chauffage pour véhicule automobile selon l'une des revendications précédentes, **caractérisé en ce qu'**il comprend un capteur de température du liquide de refroidissement en sortie du moteur et un capteur de température de l'air de l'habitacle.

6. Système de chauffage pour véhicule automobile selon l'une des revendications précédentes, **caractérisé en ce qu'**il comprend un EGR haute pression (12, 13).

7. Véhicule automobile comprenant un système de chauffage selon l'une des revendications 1 à 6.

8. Procédé de régulation de la température de l'habitacle d'un véhicule automobile selon la revendication 7, **caractérisé en ce qu'**il comprend une étape initiale de montée en température dans laquelle la température d'eau en sortie du moteur est relativement basse et la température de l'habitacle n'a pas encore atteint la température recherchée, dans laquelle une première vanne (18) dirige les gaz d'échappement basse pression vers un échangeur gaz d'échappement - liquide (19) pour chauffer l'habitacle en récupérant de la chaleur provenant des gaz d'échappement basse pression et dans laquelle une deuxième vanne (7) ferme partiellement l'échappement des gaz vers l'extérieur et les force vers l'admission moteur (5) pour transmettre ces gaz basse pression au moteur (1) pour diminuer les émissions polluantes des gaz d'échappement.

9. Procédé de régulation de la température de l'habitacle d'un véhicule automobile selon la revendication 8, **caractérisé en ce qu'**il comprend une étape intermédiaire dans laquelle la première vanne (18) dirige les gaz vers l'échangeur gaz d'échappement - liquide (19) alors que la deuxième vanne (7) dirige substantiellement l'échappement des gaz vers l'extérieur.

10. Procédé de régulation de la température de l'habitacle d'un véhicule automobile selon la revendication 8 ou 9, **caractérisé en ce qu'**il comprend une étape de régime stabilisé, dans laquelle les gaz d'échappement sont orientés directement vers l'extérieur par les première (18) et deuxième (7) vannes, par l'intermédiaire d'un by-pass (20) et sans recirculation ou peu par la ligne de recirculation (11).

## Claims

1. Heating system for a motor vehicle comprising an engine (1), an exhaust line (6) for the exhaust gases, and the possibility of low-pressure recirculation (11) of the exhaust gases to the inlet side of the compressor (3) of the line that admits gases to the engine, this recirculation being controlled by a recirculation valve (7), **characterized in that** the system comprises an exhaust gas/liquid exchanger (19) in the exhaust line (6) upstream of the recirculation valve (7) and able to cool the exhaust gases and at the same time heat up a liquid, and **in that** it comprises a device for recuperating the heat from this liquid in order to heat the passenger compartment of the vehicle.

2. Heating system for a motor vehicle according to Claim 1, **characterized in that** the exhaust gas/liquid exchanger (19) is positioned near the recirculation valve (7) after the outlet of at least one posttreatment system such as a catalytic converter.

3. Heating system for a motor vehicle according to Claim 1 or 2, **characterized in that** the liquid is the engine coolant.

4. Heating system for a motor vehicle according to one of the preceding claims, **characterized in that** it comprises a three-way valve (18) for directing the exhaust gases towards the exhaust gas/liquid exchanger (19) or towards a bypass (20).

5. Heating system for a motor vehicle according to one of the preceding claims, **characterized in that** it comprises a temperature sensor that senses the temperature of the coolant leaving the engine and a temperature sensor that senses the temperature of the passenger compartment air.

6. Heating system for a motor vehicle according to one of the preceding claims, **characterized in that** it comprises high-pressure EGR (12, 13).

7. Motor vehicle comprising a heating system according to one of Claims 1 to 6.

8. Method of regulating the temperature in the passenger compartment of a motor vehicle according to Claim 7, **characterized in that** it comprises an initial warm-up step in which the temperature of the water leaving the engine is relatively low and the temperature of the passenger compartment has not yet reached the desired temperature, in which initial step a first valve (18) directs the low-pressure exhaust gases to an exhaust gas/liquid exchanger (19) to heat up the passenger compartment by recuperating heat from the low-pressure exhaust gases and in which a second valve (7) partially closes off the exhausting of gases to the outside and forces them to the inlet side of the engine (5) in order to introduce these low-pressure gases into the engine (1) to reduce the pollutant emissions of the exhaust gases.

9. Method of regulating the temperature of the passenger compartment of a motor vehicle according to Claim 8, **characterized in that** it comprises an intermediate step in which the first valve (18) directs the gases towards the exhaust gas/liquid exchanger (19) whereas the second valve (7) substantially directs the exhaust gases to the outside.

10. Method of regulating the temperature of the passenger compartment of a motor vehicle according to Claim 8 or 9, **characterized in that** it comprises a steady state step in which the exhaust gases are directed directly to the outside by the first (18) and second (7) valve, via a bypass (20) and with little or no recirculation through the recirculation line (11).

## Patentansprüche

1. Heizsystem für ein Kraftfahrzeug, das einen Motor (1), eine Auspuffanlage (6) für die Abgase und eine mögliche Rückführung (11) der Niederdruck-Abgase an den Eingang des Verdichters (3) der Ansaugleitung der Gase zum Motor enthält, wobei diese Rückführung von einem Rückführventil (7) gesteuert wird, **dadurch gekennzeichnet, dass** das System einen Abgas-Flüssigkeit-Tauscher (19) auf der Auspuffanlage (6) vor dem Rückführventil (7) aufweist, der die Abgase kühlen und gleichzeitig eine Flüssigkeit erwärmen kann, und dass es eine Vorrichtung enthält, um die Wärme dieser Flüssigkeit rückzugewinnen, um den Innenraum des Fahrzeugs zu heizen.

2. Heizsystem für ein Kraftfahrzeug nach Anspruch 1, **dadurch gekennzeichnet, dass** der Abgas-Flüssigkeit-Tauscher (19) sich nahe dem Rückführventil (7) nach dem Ausgang mindestens eines Nachbehandlungssystems wie eines Katalysators befindet.

3. Heizsystem für ein Kraftfahrzeug nach Anspruch 1 oder 2, **dadurch gekennzeichnet, dass** die Flüssigkeit die Kühlflüssigkeit des Motors ist.

4. Heizsystem für ein Kraftfahrzeug nach einem der vorhergehenden Ansprüche, **dadurch gekennzeichnet, dass** es ein Dreiwegeventil (18) aufweist, um die Abgase zum Abgas-Flüssigkeit-Tauscher (19) oder zu einem Bypass (20) zu lenken.

5. Heizsystem für ein Kraftfahrzeug nach einem der vorhergehenden Ansprüche, **dadurch gekennzeichnet, dass** es eine Temperatursonde der Kühlflüssigkeit am Ausgang des Motors und eine Temperatursonde der Luft des Innenraums aufweist.

6. Heizsystem für ein Kraftfahrzeug nach einem der vorhergehenden Ansprüche, **dadurch gekennzeichnet, dass** es eine Hochdruck-AGR (12, 13) enthält.

7. Kraftfahrzeug, das ein Heizsystem nach einem der Ansprüche 1 bis 6 enthält.

8. Verfahren zur Regelung der Temperatur des Innenraums eines Kraftfahrzeugs nach Anspruch 7, **dadurch gekennzeichnet, dass** es einen Anfangsschritt des Temperaturanstiegs enthält, bei dem die Wassertemperatur am Ausgang des Motors relativ niedrig ist und die Temperatur des Innenraums noch nicht die gesuchte Temperatur ereicht hat, wobei ein erstes Ventil (18) die Niederdruck-Abgase zu einem Abgas-Flüssigkeit-Tauscher (19) leitet, um den Innenraum zu heizen, indem von den Niederdruck-Abgasen stammende Wärme rückgewonnen wird, und wobei ein zweites Ventil (7) den Austritt der Gase nach außen teilweise schließt und sie zum Motor-Ansaugrohr (5) zwingt, um diese Niederdruckgase zum Motor (1) zu übertragen, um die Schadstoffemissionen der Abgase zu verringern.

9. Verfahren zur Regelung der Temperatur des Innenraums eines Kraftfahrzeugs nach Anspruch 8, **dadurch gekennzeichnet, dass** es einen Zwischenschritt enthält, in dem das erste Ventil (18) die Gase zum Abgas-Flüssigkeit-Tauscher (19) lenkt, während das zweite Ventil (7) im Wesentlichen den Austritt der Gase nach außen lenkt.

10. Verfahren zur Regelung der Temperatur des Innenraums eines Kraftfahrzeugs nach Anspruch 8 oder 9, **dadurch gekennzeichnet, dass** es einen Schritt mit stabilisierter Drehzahl enthält, in dem die Abgase vom ersten (18) und vom zweiten Ventil (7) über einen Bypass (20) und ohne oder mit wenig Rückführung über die Rückführleitung (11) direkt nach außen gelenkt werden.
